(19) Europäisches Patentamt
European Patent Office
Office européen des brevets

(11) EP 4 389 815 A1

(12) EUROPEAN PATENT APPLICATION
published in accordance with Art. 153(4) EPC

(43) Date of publication:
**26.06.2024 Bulletin 2024/26**

(21) Application number: **22878396.5**

(22) Date of filing: **28.09.2022**

(51) International Patent Classification (IPC):
***C08L 11/02*** *(2006.01)* ***C08F 36/18*** *(2006.01)*
***C08K 3/22*** *(2006.01)* ***C08K 5/3447*** *(2006.01)*

(52) Cooperative Patent Classification (CPC):
**C08F 36/18; C08K 3/22; C08K 5/3447; C08L 11/02**

(86) International application number:
**PCT/JP2022/036220**

(87) International publication number:
**WO 2023/058526 (13.04.2023 Gazette 2023/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.10.2021 JP 2021164319**

(71) Applicant: **Denka Company Limited**
**Tokyo 103-8338 (JP)**

(72) Inventors:
- **ITO, Misaki**
**Tokyo 103-8338 (JP)**
- **KUMAGAI, Yushi**
**Tokyo 103-8338 (JP)**
- **KATO, Masahiro**
**Tokyo 103-8338 (JP)**

(74) Representative: **Gulde & Partner**
**Patent- und Rechtsanwaltskanzlei mbB**
**Wallstraße 58/59**
**10179 Berlin (DE)**

# (54) CHLOROPRENE-BASED POLYMER LATEX COMPOSITION, AND DIP-MOLDED ARTICLE

(57) The present invention provides a chloroprene-based polymer latex composition, which has a low residual amount of mercaptans with hygiene concerns remaining, and which can obtain a chloroprene-based polymer dip-molded article having excellent flexibility and high breaking strength even with use of less vulcanization accelerator and sulfur, due to the plasticizing effect of a low molecular weight polymer and the use of a heteroaromatic ring-based compound.

According to the present invention, there is provided a chloroprene-based polymer latex composition including a chloroprene-based polymer latex, a metal oxide, and a heteroaromatic ring-based compound, wherein the chloroprene-based polymer latex composition includes 0.5 to 15.0 parts by mass of the metal oxide and 0.1 to 10.0 parts by mass of the heteroaromatic ring-based compound per 100 parts by mass of solid content of the chloroprene-based polymer latex, the chloroprene-based polymer latex composition has a content of alkyl mercaptan compounds of 0.34 parts by mass or less per 100 parts by mass of solid content of the chloroprene-based polymer latex, and the heteroaromatic ring-based compound is represented by chemical formula (1).

EP 4 389 815 A1

## Description

### Technical Field

The present invention relates to a chloroprene-based polymer latex composition and a dip-molded article thereof. More specifically, the present invention relates to a chloroprene-based polymer latex composition containing chloroprene and a dip-molded article obtained using the composition.

### Background Art

Chloroprene-based polymers are known as materials for dip-molded products such as medical surgical gloves, medical examination gloves, industrial gloves, balloons, catheters, and rubber boots.

Various techniques have been proposed for improving the flexibility of chloroprene-based polymers and for using chloroprene-based polymers for dip-molded products. Regarding vibrationproof rubber applications, Patent Literature 1 describes that damping performance is improved by mixing a low molecular weight chloroprene polymer with a number average molecular weight in the range of 500 to 50,000. Regarding dip-molded product applications, Patent Literature 2 describes a polychloroprene latex with a pH of 7 to 14, which contains 100 parts by mass of modified polychloroprene obtained by copolymerizing chloroprene and methacrylic acid, 90 to 150 parts by mass of water, 1 to 5 parts by mass of emulsifier, 0.5 to 2.5 parts by mass of potassium ion. Regarding dip-molded product applications, Patent Literature 3 describes a mercaptan modified polychloroprene latex, for which chloroprene and 2,3-dichloro-1,3-butadiene are copolymerized, and in the 13C-solid NMR spectrum of polychloroprene, a peak area (A) at 126.2 to 127.6 ppm, a peak area (B) at 122.0 to 126.2 ppm, and a peak area (C) at 129.9 to 130.3 ppm are within the range shown by the following general formula (I). Regarding dip-molded product applications, Patent Literature 4 describes a chloroprene polymer latex that can achieve both excellent flexibility and mechanical properties in a vulcanized rubber produced by dip-molding by containing a high molecular weight substance and a low molecular weight substance.

$$\frac{4.0}{100} \leqq \frac{A}{B-C} \leqq \frac{5.8}{100} \quad \cdots \quad (\mathrm{I})$$

### Citation List

#### Patent Literature

Patent Literature 1: JP-A-H7-292165
Patent Literature 2: JP-A-2014-114342
Patent Literature 3: WO2019/009038
Patent Literature 4: JP-A-2019-143002

### Summary of Invention

#### Technical Problem

Dip-molded articles of chloroprene-based polymers tend to require high flexibility similar to dip-molded articles obtained using natural rubber or polyisoprene, and a chloroprene-based polymer latex composition having improved physical properties regarding flexibility directly related to the feeling of wearing and the texture of the film is desired. In addition, vulcanization accelerators such as thiuram-based, dithiocarbamate-based, thiourea-based, guanidine-based, xanthate-based, thiazole-based vulcanization accelerators, which are preferred for improving mechanical strength, fall under the category of type IV allergy-causing substances, and a chloroprene-based polymer latex composition and a dip-molded article thereof that exhibit excellent mechanical properties even with a reduced amount of these compounds used, and even without the use of these compounds from the viewpoint of hygiene. Furthermore, from the viewpoint of hygiene and odor suppression, it is desirable that the residual content of mercaptans used as a chain transfer agent in polymerization is low.

Therefore, the present invention is to provide a chloroprene-based polymer latex composition capable of obtaining a chloroprene-based polymer dip-molded article which has a low residual amount of mercaptans with hygiene

concerns remaining, and which has excellent flexibility and high breaking strength even with a reduced amount of vulcanization accelerator and sulfur added or even without the use of vulcanization accelerator or sulfur.

## Solution to Problem

That is, the present invention is a chloroprene-based polymer latex composition comprising a chloroprene-based polymer latex, a metal oxide, and a heteroaromatic ring-based compound, wherein the chloroprene-based polymer latex composition comprises 0.5 to 15.0 parts by mass of the metal oxide and 0.1 to 10.0 parts by mass of the heteroaromatic ring-based compound per 100 parts by mass of solid content of the chloroprene-based polymer latex, the chloroprene-based polymer latex composition has a content of alkyl mercaptan compounds of 0.34 parts by mass or less per 100 parts by mass of solid content of the chloroprene-based polymer latex, and the heteroaromatic ring-based compound is represented by chemical formula (1).

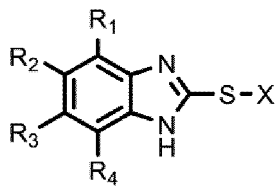

(1)

In chemical formula (1), X represents a hydrogen atom or a metal atom. $R_1$ to $R_4$ each represents a hydrogen atom, an alkyl group which may have a substituent, an ether group which may have a substituent, a nitro group, an amino group, or a carboxyl group. $R_1$ to $R_4$ each may be the same or different.

According to another aspect of the present invention, there is provided a dip-molded article obtained using the chloroprene-based polymer latex composition described above.

Various embodiments of the present invention are illustrated below. The embodiments shown below can be combined with each other.

[1] A chloroprene-based polymer latex composition comprising a chloroprene-based polymer latex, a metal oxide, and a heteroaromatic ring-based compound, wherein:

the chloroprene-based polymer latex composition comprises 0.5 to 15.0 parts by mass of the metal oxide and 0.1 to 10.0 parts by mass of the heteroaromatic ring-based compound per 100 parts by mass of solid content of the chloroprene-based polymer latex,
the chloroprene-based polymer latex composition has a content of alkyl mercaptan compounds of 0.34 parts by mass or less per 100 parts by mass of solid content of the chloroprene-based polymer latex, and
the heteroaromatic ring-based compound is represented by chemical formula (1).

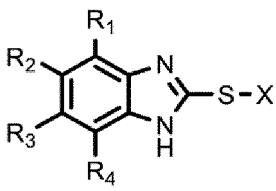

(1)

In chemical formula (1), X represents a hydrogen atom or a metal atom. $R_1$ to $R_4$ each represents a hydrogen atom, an alkyl group which may have a substituent, an ether group which may have a substituent, a nitro group, an amino group, or a carboxyl group. $R_1$ to $R_4$ each may be the same or different.

[2] The chloroprene-based polymer latex composition of [1], wherein:
the chloroprene-based polymer latex composition comprises 0.5 to 10.0 parts by mass of an antioxidant per 100 parts by mass of solid content of the chloroprene-based polymer latex.
[3] The chloroprene-based polymer latex composition of [1] or [2], wherein:

the chloroprene-based polymer latex comprises at least one of a homopolymer of chloroprene and a copolymer of chloroprene and 2,3-dichloro-1,3-butadiene, and

the chloroprene-based polymer latex has a first peak with a weight average molecular weight of 500,000 or more and a second peak with a weight average molecular weight of 7,000 to 80,000, in a molecular weight distribution obtained by gel permeation chromatography measurement of a sol content soluble in tetrahydrofuran in the chloroprene-based polymer latex.

[4] The chloroprene-based polymer latex composition of any one of [1] to [3], wherein:
a chloroprene-based polymer rubber obtained by freeze-drying the chloroprene-based polymer latex has a toluene insoluble content of 50 to 85% by mass.
[5] The chloroprene-based polymer latex composition of any one of [1] to [4], wherein:
a chloroprene-based polymer rubber obtained by freeze-drying the chloroprene-based polymer latex is cut into pieces, placed in a flask equipped with a condenser, and extracted with an ethanol/toluene azeotropic mixture specified by JIS K6229 to form an extract, among components of the extract measured by gas chromatography, a mass ratio b/a of a total amount b of abietic acid, neoabietic acid, palustric acid, levopimaric acid, and salts thereof to a total amount a of dehydroabietic acid, pimaric acid, isopimaric acid, dihydroabietic acid, and salts thereof is 0.10 or more.
[6] The chloroprene-based polymer latex composition of any one of [1] to [5], wherein:
the chloroprene-based polymer latex composition does not comprise thiuram-based, dithiocarbamate-based, thiourea-based, guanidine-based, xanthate-based, or thiazole-based vulcanization accelerators, and sulfur.
[7] A dip-molded article obtained using the chloroprene-based polymer latex composition of any one of [1] to [6].
[8] The dip-molded article of [7], wherein:

the dip-molded article is an industrial or general household glove, a medical glove, a balloon, a catheter, or a boot. An industrial or general household glove, a medical glove, a balloon, a catheter, or a boot is preferable.

In the present invention, "JIS" means Japanese Industrial Standards.

### Effects of Invention

According to the present invention, by setting the content of an alkyl mercaptan compound in the chloroprene-based polymer latex composition to a specific amount or less, and by blending a specific amount of a heteroaromatic ring-based compound and a metal compound into the chloroprene-based polymer latex composition, a chloroprene-based polymer latex composition capable of obtaining a dip-molded article of chloroprene-based polymer, which has a low content of alkyl mercaptan compounds with hygiene concerns, and which has excellent flexibility and high breaking strength even with a reduced amount of vulcanization accelerator and sulfur added or even without the use of vulcanization accelerator or sulfur, is provided.

### Description of Embodiments

Hereinafter, embodiments for carrying out the present invention will be described in detail. Note that the present invention is not limited to the embodiments described below.

1. Chloroprene-based polymer latex composition

First, the chloroprene-based polymer latex composition according to the first embodiment of the present invention will be described.

1.1 Chloroprene-based polymer

The chloroprene-based polymer described in this embodiment is a polymer containing a monomer unit derived from 2-chloro-1,3-butadiene (hereinafter also referred to as chloroprene). In addition, the chloroprene-based polymer according to one embodiment of the present invention can also be a copolymer of chloroprene and other monomers copolymerizable with chloroprene. Examples of other monomers include 1-chloro-1,3-butadiene, 2,3-dichloro-1,3-butadiene, isoprene, styrene, methacrylic acid, acrylonitrile, sulfur, and the like. As other monomers, two or more types of these may be used in combination. The chloroprene-based polymer according to one embodiment of the present invention may contain no sulfur, and the chloroprene-based polymer according to one embodiment of the present invention may not have an -S-S-structure caused by sulfur in the main chain.
The chloroprene-based polymer according to one embodiment of the present invention may be obtained by mixing two or more different chloroprene-based polymers. The chloroprene-based polymer preferably contains at least

one selected from the group consisting of a homopolymer of chloroprene (2-chloro-1,3-butadiene), a copolymer of chloroprene and 1-chloro-1,3-butadiene, a copolymer of chloroprene and 2,3-dichloro-1,3-butadiene, and a copolymer of chloroprene, 1-chloro-1,3-butadiene and 2,3-dichloro-1,3-butadiene, and more preferably contains at least one of a homopolymer of chloroprene and a copolymer of chloroprene and 2,3-dichloro-1,3 -butadiene.

The chloroprene-based polymer according to one embodiment of the present invention can contain 50 to 100% by mass, preferably 90 to 100% by mass of monomer unit derived from chloroprene, when the chloroprene-based polymer contained in the chloroprene-based polymer latex composition is 100% by mass. The content of monomer unit derived from chloroprene is, for example, 50, 55, 60, 65, 70, 75, 80, 85, 90, 91, 92, 93, 94, 95, 96, 97, 98, 99, 100% by mass, and may be within the range between any two of the numerical values exemplified here.

The chloroprene-based polymer according to one embodiment of the present invention can contain 0 to 30% by mass of monomer unit derived from 2,3-dichloro-1,3-butadiene, when the chloroprene-based polymer contained in the chloroprene-based polymer latex composition is 100% by mass. The content of monomer unit derived from 2,3-dichloro-1,3-butadiene is, for example, 0, 1, 2, 3, 4, 5, 6, 7, 8, 9, 10, 11, 12, 13, 14, 15, 16, 17, 18, 19, 20, 21, 22,23, 24, 25, 26, 27, 28, 29, 30% by mass, and may be within the range between any two of the numerical values exemplified here.

The chloroprene-based polymer according to one embodiment of the present invention may also contain a monomer unit derived from chloroprene and a monomer unit derived from 2,3-dichloro-1,3-butadiene. In this case, the chloroprene-based polymer preferably contains 0 to 30% by mass, more preferably 5 to 25% by mass of monomer unit derived from 2,3-dichloro-1,3-butadiene, when the total of monomer unit derived from chloroprene and monomer unit derived from 2,3-dichloro-1,3-butadiene contained in the chloroprene-based polymer is 100% by mass.

In addition, when the chloroprene-based polymer is a mixture of two or more different chloroprene-based polymers, the content of each monomer unit means the total of each monomer unit in all chloroprene-based polymers contained in the chloroprene-based polymer latex composition.

In the chloroprene-based polymer according to one embodiment of the present invention, the content of the sulfur-modified chloroprene-based polymer contained in the chloroprene-based polymer latex composition is preferably 20% by mass or less, when the chloroprene-based polymer contained in the chloroprene-based polymer latex composition is 100% by mass. The content of the sulfur-modified chloroprene-based polymer is, for example, 0, 1, 2, 3, 4, 5, 6, 7, 8, 9, 10, 11, 12, 13, 14, 15, 16, 17, 18, 19, 20% by mass, and may be within the range between any two of the numerical values exemplified here. The chloroprene-based polymer according to one embodiment of the present invention may not contain a sulfur-modified chloroprene-based polymer.

1.2 Chloroprene-based polymer latex

The chloroprene-based polymer latex according to one embodiment of the present invention may be one in which a chloroprene-based polymer is dispersed in water, may be one in which at least one selected from the group consisting of a homopolymer of chloroprene, a copolymer of chloroprene and 1-chloro-1,3-butadiene, a copolymer of chloroprene and 2,3-dichloro-1,3-butadiene, and a copolymer of chloroprene, 1-chloro-1,3-butadiene, and 2,3-dichloro-1,3-butadiene is dispersed in water, and may be one in which a homopolymer of chloroprene, or a copolymer of chloroprene and 2,3-dichloro-1,3-butadiene is dispersed in water.

1.2.1 Alkyl mercaptan compound contained in chloroprene-based polymer latex composition

In the chloroprene-based polymer latex composition according to the present invention, the content of the alkyl mercaptan compound is 0.34 parts by mass or less, per 100 parts by mass of solid content of the chloroprene-based polymer latex. The content of the alkyl mercaptan compounds is, for example, 0, 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34 parts by mass, and may be within the range between any two of the numerical values exemplified here.

The content of the alkyl mercaptan compound in the chloroprene-based polymer latex composition can be measured using gas chromatography. The chloroprene-based polymer latex or composition may be analyzed. In this case, if the solid content concentration of the chloroprene-based polymer latex or composition is high and interferes with component measurement, dilution with a solvent such as THF or standard addition methods may also be applied. Measurement conditions for gas chromatography can be as shown in Examples.

The alkyl mercaptan compound is not particularly limited, but includes, for example, long-chain alkyl mercaptans such as n-dodecylmercaptan and tert-dodecylmercaptan. By setting the content of the alkyl mercaptan compound to 0.34 parts by mass or less, it is possible to suppress the odor of the obtained dip-molded article and improve its hygiene.

The alkyl mercaptan compound is usually used as a chain transfer agent to obtain the chloroprene-based polymer contained in the chloroprene-based polymer latex composition. The content of the alkyl mercaptan compound contained in the chloroprene-based polymer latex composition can be controlled by adjusting the charging amount of

chain transfer agent and the polymerization conversion rate in the polymerization process to obtain the chloroprene-based polymer and chloroprene-based polymer latex. In addition, if necessary, the charging amount of chain transfer agent can also be adjusted by adding the chloroprene monomer or the monomer represented by 2,3-dichloro-1,3-butadiene in batches during polymerization reaction.

1.2.2 Weight average molecular weight of chloroprene-based polymer latex

The chloroprene-based polymer latex according to one embodiment of the present invention may have a first peak with a weight average molecular weight of 400,000 or more, in the molecular weight distribution obtained by gel permeation chromatography measurement of the sol content soluble in tetrahydrofuran in the chloroprene-based polymer latex. The first peak preferably has a weight average molecular weight of 500,000 or more.

When the weight average molecular weight of the first peak in the above molecular weight distribution is equal to or higher than the lower limit, the obtained dip-molded article can obtain more excellent breaking strength. The weight average molecular weight of the first peak in the above molecular weight distribution may be 500,000 or more, or may be 600,000 or more, from the viewpoint of easily obtaining excellent breaking strength. The weight average molecular weight of the first peak is, for example, 400,000, 450,000, 500,000, 550,000, 600,000, 650,000, 700,000, 750,000, 800,000, 850,000, 900,000, 950,000, 1,000,000, and may be within the range between any two of the numerical values exemplified here.

The chloroprene-based polymer latex according to one embodiment of the present invention may have a second peak with a weight average molecular weight of 7,000 to 120,000 in the above molecular weight distribution, and the second peak preferably has a weight average molecular weight of 7,000 to 80,000.

In the above molecular weight distribution, when the weight average molecular weight of the second peak is equal to or higher than the lower limit, more excellent breaking strength can be obtained. The weight average molecular weight of the second peak may be 10,000 or more, or 15,000 or more, from the viewpoint of easily obtaining a dip-molded article.

In the above molecular weight distribution, when the weight average molecular weight of the second peak is equal to or less than the upper limit, more excellent flexibility can be obtained. The weight average molecular weight of the second peak of the chloroprene-based polymer may be 80,000 or less, 70,000 or less, 50,000 or less, or 30,000 or less, from the viewpoint of easily obtaining even more excellent flexibility.

The weight average molecular weight of the second peak is, for example, 7,000, 8,000, 9,000, 10,000, 11,000, 12,000, 13,000, 14,000, 15,000, 16,000, 17,000, 18,000, 19,000, 20,000, 21,000, 22,000, 23,000, 24,000, 25,000, 26,000, 27,000, 28,000, 29,000, 30,000, 35,000, 40,000, 50,000, 60,000, 70,000, 80,000, 100,000, 120,000, and may be within the range between any two of the numerical values exemplified here.

The chloroprene-based polymer latex according to one embodiment of the present invention preferably has the first peak and the second peak in the above molecular weight distribution.

According to the chloroprene-based polymer latex according to one embodiment of the present invention, it is possible to obtain a dip-molded article having even more excellent flexibility and breaking strength by having the above molecular weight distribution.

The molecular weight distribution of the sol content soluble in tetrahydrofuran in the chloroprene-based polymer latex can be obtained by measuring the weight average molecular weight using gel permeation chromatography. The chloroprene-based polymer latex is dissolved in tetrahydrofuran, and the eluted content (sol content) is analyzed by gel permeation chromatography (GPC). Measurement conditions for GPC can be as described in Examples.

The molecular weight distribution of the sol content soluble in tetrahydrofuran in the chloroprene-based polymer latex contained in the chloroprene-based polymer latex composition can also be determined by using the chloroprene-based polymer latex composition as the analysis target, dissolving the chloroprene-based polymer latex composition in tetrahydrofuran, and performing the analysis in the same manner.

By mixing two or more types of chloroprene-based polymer latex with different weight average molecular weights, a chloroprene-based polymer latex for which a first peak and a second peak are detected in the molecular weight distribution may be obtained. When two or more types of chloroprene-based polymer latex are mixed, the weight average molecular weight of each chloroprene-based polymer latex can be controlled by adjusting the type and amount of chain transfer agent, polymerization temperature, polymerization time, polymerization conversion rate, etc. in the polymerization of each chloroprene-based polymer latex. When using two or more types of chloroprene-based polymer latex, the chloroprene-based polymer latex may be obtained by stirring and mixing the two or more types of chloroprene-based polymer latex at 100 rpm for 1 minute using a paddle blade.

1.2.3 Toluene insoluble content of chloroprene-based polymer latex

The toluene insoluble content (gel content) of the chloroprene-based polymer latex according to one embodiment

of the present invention can be 50 to 85% by mass, more preferably 60 to 85% by mass, with respect to 100% by mass of the chloroprene-based polymer. The toluene insoluble content is, for example, 50, 55, 60, 65, 70, 75, 80, 85% by mass, and may be within the range between any two of the numerical values exemplified here. By setting the toluene insoluble content within the above numerical range, more excellent breaking strength is exhibited. This numerical range can be adjusted by preparing two or more types of chloroprene-based polymer latex with different toluene insoluble contents and adjusting their mixing ratio.

"Toluene insoluble content" is determined by cutting 1 g of chloroprene-based polymer rubber obtained by freeze-drying chloroprene-based polymer latex into 2 mm square pieces, dissolving it in toluene for 16 hours, centrifuging, then separating the insoluble content using a 200-mesh wire mesh, and measuring the dry weight. The toluene insoluble content can be calculated from the following formula.

(mass of solid obtained by separating and drying the gel content)/(mass of solid obtained by freeze-drying latex containing chloroprene-based polymer)$\times$100

The toluene insoluble content in the chloroprene-based polymer latex contained in the chloroprene-based polymer latex composition can also be determined by using the chloroprene-based polymer latex composition as the analysis target, and analyzing the dried material obtained by freezing the chloroprene-based polymer latex composition in the same manner.

1.2.4 Amount of resin acid component contained in chloroprene-based polymer latex (mass ratio b/a)

As for the chloroprene-based polymer latex according to one embodiment of the present invention, a chloroprene-based polymer rubber obtained by freeze-drying the chloroprene-based polymer latex is cut into pieces, placed in a flask equipped with a condenser, and extracted with an ethanol/toluene azeotropic mixture specified by JIS K 6229 to form an extract, among components of the extract measured by gas chromatography, the mass ratio b/a of the total amount b of abietic acid, neoabietic acid, palustric acid, levopimaric acid, and salts thereof to the total amount a of dehydroabietic acid, pimaric acid, isopimaric acid, dihydroabietic acid, and salts thereof is preferably 0.10 or more. The above b/a is, for example, 0.1, 0.2, 0.3, 0.4, 0.5, 0.6, 0.7, 0.8, 0.9, 1.0, 1.1, 1.2, and may be within the range between any two of the numerical values exemplified here. If the mass ratio b/a is 0.10 or more, higher breaking strength will be exhibited, and more preferably, if the mass ratio b/a is in the range of 0.3 to 1.2, a dip-molded article having high breaking strength and more excellent flexibility can be obtained.

In the calculation of mass ratio b/a, the chloroprene-based polymer rubber, which is a dry product obtained by freeze-drying the chloroprene-based polymer latex, is cut into pieces, then placed in a flask equipped with a condenser, extracted with an ethanol/toluene azeotropic mixture specified by JIS K 6229, and treated with hydrochloric acid. After that, the gas chromatography-mass spectrometry measurement can be performed. Note that the measurement conditions for gas chromatography-mass spectrometry can be as described in Examples. The value obtained by dividing the peak area value of the peak corresponding to each resin acid component by the total peak area value detected by gas chromatography-mass spectrometry can be regarded as the content. In addition, the total amount a, total amount b, and mass ratio b/a can be determined from the peak area of each resin acid.

In addition, the mass ratio b/a in the chloroprene-based polymer latex contained in the chloroprene-based polymer latex composition can also be determined by using the chloroprene-based polymer latex composition as the analysis target, and analyzing the dried material obtained by freezing the chloroprene-based polymer latex composition in the same manner.

The value of the mass ratio b/a can be controlled by adjusting the types of rosin acid and rosin acid salt added as emulsifiers and their blending ratio.

1.2.5 Method for producing chloroprene-based polymer latex

Next, a method for producing the chloroprene-based polymer latex contained in the chloroprene-based polymer latex composition of the present invention will be explained.

The method for producing the chloroprene-based polymer latex according to one embodiment of the present invention may include a polymerization step of polymerizing a monomer containing chloroprene to obtain a chloroprene-based polymer latex. In addition, the method for producing the chloroprene-based polymer latex according to one embodiment of the present invention may further include a mixing step of mixing two or more types of chloroprene-based polymer latex with different weight average molecular weights.

In the polymerization step, the monomer includes chloroprene, and can also include other monomers copolymerizable with chloroprene. Examples of other monomers copolymerizable with chloroprene include 1-chloro-1,3-butadiene, 2,3-dichloro-1,3-butadiene, isoprene, styrene, methacrylic acid, acrylonitrile, sulfur, and the like. The monomer may also include chloroprene and 2,3-dichloro-1,3-butadiene.

It is preferable to adjust the type and amount of each monomer charged so that each monomer in the obtained polymer falls within the above numerical range. As an example, the copolymerization amount of 2,3-dichloro-1,3-butadiene in the chloroprene-based polymer contained in the chloroprene-based polymer latex can also be in the range of 0 to 30% by mass with respect to total 100% by mass of the chloroprene monomer and 2,3-dichloro-1,3-butadiene contained in the chloroprene-based polymer. In this case, the amount of 2,3-dichloro-1,3-butadiene charged before the start of emulsion polymerization is preferably in the range of 0 to 30 parts by mass with respect to total 100 parts by mass of chloroprene monomer and 2,3-dichloro-1,3-butadiene monomer. From the viewpoint of polymerization control, the amount of 2,3-dichloro-1,3-butadiene charged is more preferably 5 to 25 parts by mass with respect to total 100 parts by mass of chloroprene monomer and 2,3-dichloro-1,3-butadiene monomer.

When producing a chloroprene-based polymer, raw monomers are polymerized by a polymerization method such as emulsion polymerization, solution polymerization, suspension polymerization, or bulk polymerization. Among these polymerization methods, emulsion polymerization is preferred because it has various advantages such as easy control, easy removal of polymer from the polymerization-completed solution and relatively high polymerization rate.

Emulsion polymerization is a type of radical polymerization, in which raw material monomers are introduced into a reaction vessel together with a chain transfer agent, water, an alkali (e.g., metal hydroxide such as potassium hydroxide, sodium hydroxide), an emulsifier (dispersant), a reducing agent (e.g., sodium bisulfite), a polymerization initiator, etc., and then polymerized.

As the type of chain transfer agent used during emulsion polymerization is not particularly limited, those commonly used in emulsion polymerization of chloroprene can be used. Examples thereof include long chain alkyl mercaptans such as n-dodecyl mercaptan and tert-dodecyl mercaptan, dialkyl xanthogen disulfides such as diisopropyl xanthogen disulfide and diethyl xanthogen disulfide, iodoform, etc. As the chain transfer agent, long chain alkyl mercaptans are preferred, and n-dodecyl mercaptan is more preferred.

By adjusting the type and amount of the chain transfer agent, the weight average molecular weight of the obtained chloroprene-based polymer latex can be adjusted.

As an example, in order to obtain a chloroprene-based polymer latex for which a first peak exhibiting a weight average molecular weight of 500,000 or more is detected in the molecular weight distribution, the amount of chain transfer agent charged before the start of emulsion polymerization is preferably 0.01 parts by mass or more, with respect to 100 parts by mass of monomers (for example, a total of 100 parts by mass of chloroprene and 2,3-dichloro-1,3-butadiene). From the viewpoint of obtaining a chloroprene-based polymer latex for which a first peak exhibiting a weight average molecular weight of 500,000 or more is detected, the amount of chain transfer agent charged is more preferably 0.02 to 0.05 parts by mass, for example, 0.01, 0.02, 0.03, 0.04, 0.05, 0.06, 0.07, 0.08, 0.09 parts by mass, less than 0.10 parts by mass, and may be within the range between any two of the numerical values exemplified here. When the amount of chain transfer agent, especially long chain alkyl mercaptans charged is 0.01 parts by mass or more, the storage stability of the latex is further improved, and when the charging amount is less than 0.10 parts by mass, especially less than 0.05 parts by mass, the amount of toluene insoluble content increases, and the obtained dip-molded article containing the chloroprene-based polymer latex has a higher breaking strength.

In addition, in order to obtain a chloroprene-based polymer latex for which a second peak exhibiting a weight average molecular weight of 7,000 to 80,000 is detected in the molecular weight distribution, the amount of chain transfer agent charged before the start of emulsion polymerization is preferably 1.0 to 10.0 parts by mass, with respect to 100 parts by mass of monomers. In this case, the charging amount is, for example, 1.0, 2.0, 3.0, 4.0, 5.0, 6.0, 7.0, 8.0, 9.0, 10.0 parts by mass, and may be within the range between any two of the numerical values exemplified here.

Examples of the emulsifier include anionic emulsifiers and nonionic emulsifiers. Examples of anionic emulsifiers include fatty acid salts such as beef tallow fatty acid potassium salt, partially hydrogenated beef tallow fatty acid potassium salt, potassium oleate, and sodium oleate; resin acid salts such as potassium rosinate, sodium rosinate, hydrogenated potassium rosinate, and hydrogenated sodium rosinate; alkylbenzene sulfonates such as sodium dodecylbenzenesulfonate; and sodium salt of β-naphthalenesulfonic acid formalin condensate, and the like. Examples of nonionic emulsifiers include polyethylene glycol ester emulsifiers, polyvinyl alcohol, and the like. Among these, anionic emulsifiers are preferred, resinates are preferred, rosin acids and resinates are preferred, and at least one selected from the group consisting of potassium rosinate and sodium rosinate is more preferred. These emulsifiers can be used alone or in combination of two or more. The amount of emulsifier used is preferably 1.0 to 6.5 parts by mass with respect to 100 parts by mass of monomers.

In particular, the emulsifier used in emulsion polymerization is preferably a resin acid salt, especially rosin acids, and rosin acids containing a component having a conjugated double bond structure such as abietic acid, neoabietic acid, palustric acid, and levopimaric acid, and metal salts thereof are preferably used. By using rosin acids containing these resin acids, the breaking strength can be further improved. In addition, it is preferable to select the type and adjust the blending amount of rosin acids so that the mass ratio b/a of the total amount b of abietic acid, neoabietic acid, palustric

acid, levopimaric acid, and salts thereof to the total amount a of dehydroabietic acid, pimaric acid, isopimaric acid, dihydroabietic acid, and salts thereof contained in the chloroprene-based polymer latex is 0.10 or more. Further, by using rosin acids, it is possible to prevent agglomeration of rubber solids and pH fluctuation when blended with base latex.

In addition, other commonly used emulsifiers and fatty acids can also be used in combination. Other emulsifiers include, for example, metal salts of aromatic sulfinic acid formalin condensates, sodium dodecylbenzenesulfonate, potassium dodecylbenzenesulfonate, sodium alkyldiphenyl ether sulfonate, potassium alkyldiphenyl ether sulfonate, sodium polyoxyethylene alkyl ether sulfonate, sodium polyoxypropylene alkyl ether sulfonate, potassium polyoxyethylene alkyl ether sulfonate, potassium polyoxypropylene alkyl ether sulfonate, and the like.

The content of anionic surfactant other than rosin acid is preferably 0.2 to 1.0% by mass with respect to 100% by mass of the chloroprene-based polymer contained in the chloroprene-based polymer latex. Therefore, the amount of anionic surfactant other than rosin acid charged before the start of emulsion polymerization is preferably within the range of 0.2 to 0.9 parts by mass, with respect to 100 parts by mass of monomers (for example, the total of chloroprene and 2,3-dichloro-1,3-butadiene).

The pH of the aqueous emulsion at the start of emulsion polymerization is preferably 10.5 to 13.5. Aqueous emulsion refers to a mixture solution of a chain transfer agent and monomers (chloroprene, 2,3-dichloro-1,3-butadiene, etc.) immediately before the start of emulsion polymerization, but it also includes cases where the composition changes by adding each component later or adding them in batches. When the pH of the aqueous emulsion at the start of emulsion polymerization is 10.5 or more, the polymerization reaction can be controlled more stably. When the pH is 13.5 or less, excessive increase in viscosity during polymerization is suppressed, and the polymerization reaction can be controlled more stably.

The polymerization temperature for emulsion polymerization is preferably within the range of 5 to 55°C. It is preferable that the temperature is 5°C or higher because the emulsion will not freeze, and if it is 55°C or lower, there will be no evaporation or boiling of the chloroprene monomer.

As the polymerization initiator, potassium persulfate, benzoyl peroxide, ammonium persulfate, hydrogen peroxide, etc. used in normal radical polymerization can be used.

The polymerization conversion rate is preferably in the range of 50 to 95%. The polymerization reaction is stopped by adding a polymerization terminator. When the polymerization conversion rate is 50% or more, the toluene insoluble content tends to increase, and the strength of the obtained dip-molded coating tends to increase. It is also advantageous in terms of production costs. When the polymerization conversion rate is less than 95%, a decrease in polymerization reactivity due to a decrease in unreacted monomers can be avoided, and a decrease in productivity can be avoided.

Examples of the polymerization terminator include diethylhydroxylamine, thiodiphenylamine, 4-tert-butylcatechol, 2,2'-methylenebis-4-methyl-6-tert-butylphenol, and the like. Unreacted monomers after emulsion polymerization can be removed by conventional methods such as vacuum distillation.

In addition, a freeze stabilizer, an emulsion stabilizer, a viscosity modifier, an antioxidant, a preservative or the like can be optionally added after polymerization to the chloroprene-based polymer latex obtained by the production method of one embodiment of the present invention, as long as the effect of the present invention is not impaired.

The method for producing the chloroprene-based polymer latex according to one embodiment of the present invention may further include a mixing step of mixing two or more types of chloroprene-based polymer latex with different weight average molecular weights after the polymerization step. In the mixing step, two or more types of chloroprene-based polymer latex can be mixed by a known method. In the mixing step, the chloroprene-based polymer latex may be obtained by, for example, stirring and mixing using a paddle blade at 30 to 300 rpm for 20 seconds to 3 minutes, and for example, at 100 rpm for 1 minute.

1.3 Metal oxide

The chloroprene-based polymer latex composition according to the present invention contains a metal oxide.

The metal oxide contained in the chloroprene-based polymer latex composition is not particularly limited, and examples thereof include zinc oxide, lead oxide, trilead tetroxide, magnesium oxide, aluminum oxide, iron oxide, beryllium oxide, and titanium oxide. Preferably, the metal oxide includes zinc oxide. Zinc oxide is generally said to function as a scavenger for the dechlorination atoms of chloroprene-based polymers. In addition, these metal oxides may be used alone or in combination of two or more.

The amount of the metal oxide added is preferably 0.5 to 15.0 parts by mass, with respect to 100 parts by mass of solid content of the chloroprene-based polymer latex contained in the chloroprene-based polymer latex composition. When the amount of the metal oxide added is 0.5 parts by mass or more, it is expected that the breaking strength will be improved due to the crosslinking effect between the polymers. When the amount of the metal oxide added is 15.0 parts by mass or less, a dip-molded article with excellent flexibility can be obtained. Further, from the viewpoint of physical property balance between flexibility and breaking strength of the obtained dip-molded article, the amount of the metal

oxide added is more preferably 0.5 to 5.0 parts by mass.

1.4 Heteroaromatic ring-based compound

The chloroprene-based polymer latex composition according to the present invention contains a heteroaromatic ring-based compound.

The heteroaromatic ring-based compound contained in the chloroprene-based polymer latex composition can be represented by the chemical formula (1), and has a benzimidazole structure. Note that the compound having this structure is sometimes employed mainly as a secondary anti-aging agent in the formulation of rubber composition.

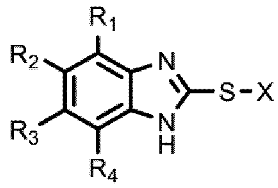

(1)

In chemical formula (1), X of the mercapto group represents a hydrogen atom or a metal atom. It is also possible for X to be a hydrogen atom and have a thiol group. In addition, X can also be a metal atom, and examples of the metal atom include zinc, sodium, copper, nickel, and tellurium, and among these, zinc is preferred.

In chemical formula (1), $R_1$ to $R_4$ each represents a hydrogen atom, an alkyl group which may have a substituent, an ether group which may have a substituent, a nitro group, an amino group, or a carboxyl group. $R_1$ to $R_4$ each may be the same or different. Further, the heteroaromatic ring-based compound may be used alone or in combination of two or more.

Examples of the heteroaromatic ring-based compound include 2-mercaptobenzimidazole, 5-methyl-2-mercaptobenzimidazole, 4-methyl-2-mercaptobenzimidazole, 5-methoxy-2-mercaptobenzimidazole, 4-methoxy-2-mercaptobenzimidazole, 5-nitro-2-mercaptobenzimidazole, 5-amino-2-mercaptobenzimidazole, 5-carboxy-2-mercaptobenzimidazole, or a zinc salt of 2-mercaptobenzimidazole. Among these, 2-mercaptobenzimidazole, 5-methyl-2-mercaptobenzimidazole, 4-methyl-2-mercaptobenzimidazole, 5-methoxy-2-mercaptobenzimidazole, 4-methoxy-2-mercaptobenzimidazole, zinc salt of 2-mercaptobenzimidazole are preferred.

The amount of the heteroaromatic ring-based compound added is preferably 0.2 to 10.0 parts by mass, with respect to 100 parts by mass of solid content of the chloroprene-based polymer latex contained in the chloroprene-based polymer latex composition. The amount of the heteroaromatic ring-based compound added is, for example, 0.2, 0.3, 0.4, 0.5, 1.0, 2.0, 3.0, 4.0, 5.0, 6.0, 7.0, 8.0, 9.0, 10.0 parts by mass, and may be within the range between any two of the numerical values exemplified here. When the amount added is 0.2 parts by mass or more, the dip-molded article obtained using the present composition exhibits extremely high breaking strength. When the amount added is 10.0 parts by mass or less, the stability of the chloroprene-based polymer latex composition is ensured. In addition, from the viewpoint of physical property balance between flexibility and breaking strength of the obtained dip-molded article, the amount added is more preferably 0.3 to 5.0 parts by mass.

1.5 Antioxidant

The chloroprene-based polymer latex composition according to the present invention can also contain an antioxidant.

The antioxidant is not particularly limited, and phenolic antioxidants, amine antioxidants, heat-resistant oxidation (aging) antioxidants, ozone-resistant antioxidants, and the like can be used. When the obtained dip-molded article is used as a medical glove, a phenolic antioxidant can be used from the viewpoint of the color tone, texture, and hygiene of the dip-molded article. In particular, hindered phenol antioxidants have the above-mentioned effects. Examples of the hindered phenolic antioxidant include 2,2'-methylenebis(4-ethyl-6-t-butylphenol), 2,2'-methylenebis(4-methyl-6-t-butylphenol), 4,4'-butylidene(3-methyl-6-t-butylphenol), 4,4'-thiobis(3-methyl-6-t-butylphenol), butylated reaction product of p-cresol and dicyclopentadiene, 2,5'-di-t-butylhydroquinone, and 2,5'-di-t-amylhydroquinone. Among these, a butylated reaction product of p-cresol and dicyclopentadiene is preferred from the viewpoint of being generally dispersible in aqueous materials. Further, these compounds may be used alone or in combination of two or more.

The amount of the antioxidant added is preferably 0.5 to 10.0 parts by mass, with respect to 100 parts by mass of solid content of the chloroprene-based polymer latex contained in the chloroprene-based polymer latex composition. The amount of the antioxidant added is, for example, 0.5, 1.0, 2.0, 3.0, 4.0, 5.0, 6.0, 7.0, 8.0, 9.0, 10.0 parts by mass, and may be within the range between any two of the numerical values exemplified here. When the amount of the

antioxidant added is 0.5 parts by mass or more, the effect of suppressing color tone change of the dip-molded article can be obtained. When the amount of the antioxidant added is 10.0 parts by mass or less, the stability of the chloroprene-based polymer latex composition is ensured. Further, from the viewpoint of physical property balance between flexibility and breaking strength of the obtained dip-molded article, the amount of the antioxidant added is more preferably 0.5 to 5.0 parts by mass.

1.6 Vulcanizing agent and vulcanization accelerator

The chloroprene-based polymer latex composition according to one embodiment of the present invention can also contain a vulcanizing agent and/or a vulcanization accelerator. In addition, the chloroprene-based polymer latex composition according to one embodiment of the present invention may not contain sulfur and aforementioned vulcanization accelerators such as thiuram-based, dithiocarbamate-based, thiourea-based, guanidine-based, xanthate-based, thiazole-based vulcanization accelerators. In other words, the chloroprene-based polymer latex composition molded articles include those that contain a vulcanizing agent but do not contain a vulcanization accelerator, those that do not contain a vulcanizing agent but contain a vulcanization accelerator, those that contain a vulcanizing agent and a vulcanization accelerator, and those that do not contain a vulcanizing agent and a vulcanization accelerator. Whether or not to incorporate a vulcanizing agent and a vulcanization accelerator may be determined depending on the intended dip-molded article.

Examples of the vulcanizing agent include, but are not limited to, sulfur, zinc oxide, magnesium oxide, and the like. The amount of the vulcanizing agent added can be 0 to 10.0 parts by mass, with respect to 100 parts by mass of solid content of the chloroprene-based polymer latex contained in the chloroprene-based polymer latex composition. The amount of the vulcanizing agent added is, for example, 0, 1, 2, 3, 4, 5, 6, 7, 8, 9, 10 parts by mass, and may be within the range between any two of the numerical values exemplified here.

A vulcanization accelerator is an agent that is added during the vulcanization of raw rubber for the purpose of interacting with the vulcanizing agent to increase the vulcanization rate, shorten the vulcanization time, lower the vulcanization temperature, reduce the amount of vulcanizing agent, and improve the physical properties of the vulcanized rubber, and usually refers to an agent that accelerates the sulfur vulcanization reaction.

Examples of the vulcanization accelerator commonly used for vulcanization of the chloroprene-based polymer latex include, but are not limited to, thiuram-based, dithiocarbamate-based, thiourea-based, guanidine-based, xanthate-based, thiazole-based vulcanization accelerators, and the like. These may be used alone or in combination of two or more as necessary.

Examples of the thiuram-based vulcanization accelerator include tetramethylthiuram disulfide, tetraethylthiuram disulfide, tetrabutylthiuram disulfide, tetrakis(2-ethylhexyl) thiuram disulfide, tetramethylthiuram monosulfide, dipentamethylenethiuram tetrasulfide, and the like.

Examples of the dithiocarbamate-based vulcanization accelerator include sodium dibutyldithiocarbamate, zinc dimethyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, tellurium diethyldithiocarbamate, and the like, and zinc dibutyldithiocarbamate is particularly preferably used.

Examples of the thiourea-based vulcanization accelerator include ethylenethiourea, N,N'-diethylthiourea, trimethylthiourea, N,N'-diphenylthiourea, and the like.

Examples of the guanidine-based vulcanization accelerator include 1,3-diphenylguanidine, 1,3-di-o-tolylguanidine, 1-o-tolylbiguanide, di-o-tolylguanidine salt of dicatechol borate, and the like.

Examples of the xanthate-based vulcanization accelerator include zinc butylxanthate, zinc isopropylxanthate, and the like.

Examples of the thiazole-based vulcanization accelerator include 2-mercaptobenzothiazole, di-2-benzothiazolyl disulfide, 2-mercaptobenzothiazole zinc salt, cyclohexylamine salt of 2-mercaptobenzothiazole, 2-(4'-morpholinodithio) benzothiazole, and the like.

The amount of the vulcanization accelerator added can be 0 to 5.0 parts by mass, with respect to 100 parts by mass of solid content of the chloroprene-based polymer latex contained in the chloroprene-based polymer latex composition. The amount of the vulcanization accelerator added is, for example, 0, 0.5, 1.0, 1.5, 2.0, 2.5, 3.0, 3.5, 4.0, 4.5, 5.0, and may be within the range between any two of the numerical values exemplified here.

The chloroprene-based polymer latex composition molded article according to one embodiment of the present invention exhibits excellent mechanical properties regardless of whether or not a vulcanizing agent and a vulcanization accelerator are added. From the viewpoint of allergy risk reduction and cost reduction, in the chloroprene-based polymer latex composition according to one embodiment of the present invention, the content of the vulcanizing agent can be 1 part by mass or less, and the content of the vulcanization accelerator can be 0.5 parts by mass or less, with respect to 100 parts by mass of solid content of the chloroprene-based polymer latex contained in the chloroprene-based polymer latex composition. In addition, the chloroprene-based polymer latex composition according to one embodiment of the

present invention may not contain a vulcanizing agent and a vulcanization accelerator, and may not contain sulfur and vulcanization accelerators such as thiuram-based, dithiocarbamate-based, thiourea-based, guanidine-based, xanthate-based, thiazole-based vulcanization accelerators.

1.6 Characteristics of chloroprene-based polymer latex composition

As for the chloroprene-based polymer latex composition according to one embodiment of the present invention, a heated dip-molded article, obtained by heating the dip-molded article containing the chloroprene-based polymer latex composition at 130°C for 4 hours preferably has a breaking strength of 17 MPa or more, more preferably 20 MPa or more, as measured in accordance with JIS K6251. The breaking strength is, for example, 17, 18, 19, 20, 21, 22, 23, 24, 25, 26, 27, 28, 29, 30, 31, 32, 33, 34, 35, 36, 37, 38, 39, 40 MPa, and may be within the range between any two of the numerical values exemplified here.

As for the chloroprene-based polymer latex composition according to one embodiment of the present invention, a heated dip-molded article, obtained by heating the dip-molded article containing the chloroprene-based polymer latex composition at 130°C for 4 hours preferably has a breaking elongation of 1000% or more, as measured in accordance with JIS K6251. The breaking elongation is, for example, 1000, 1050, 1100, 1150, 1200, 1250, 1300, 1350, 1400%, and may be within the range between any two of the numerical values exemplified here.

As for the chloroprene-based polymer latex composition according to one embodiment of the present invention, a heated dip-molded article, obtained by heating the dip-molded article containing the chloroprene-based polymer latex composition at 130°C for 4 hours preferably has a modulus at 100% elongation of 0.75 MPa or less, more preferably 0.70 MPa or less, as measured in accordance with JIS K6251. The modulus at 100% elongation is, for example, 0.3, 0.35, 0.4, 0.45, 0.5, 0.55, 0.6, 0.65, 0.7, 0.75 MPa, and may be within the range between any two of the numerical values exemplified here.

The above-mentioned dip-molded article contains a chloroprene-based polymer latex, a metal oxide, and a heteroaromatic ring-based compound, and may further contain an antioxidant. In addition, the above-mentioned dip-molded article may not contain a vulcanizing agent and a vulcanization accelerator. The method for producing the dip-molded article, and the method for measuring breaking elongation, breaking strength, and 100% modulus can be as described in Examples.

Furthermore, as mentioned above, the breaking elongation, breaking strength, and modulus at 100% elongation of the dip-molded article containing the chloroprene-based polymer latex composition can be controlled by adjusting the type and amount of the chloroprene-based polymer latex composition, the polymerization recipe and conditions of the chloroprene-based polymer latex used, the weight average molecular weight, the toluene insoluble content, etc.

As for the chloroprene-based polymer latex composition according to one embodiment of the present invention, a heated dip-molded article, obtained by heating the dip-molded article containing the chloroprene-based polymer latex composition at 130°C for 4 hours can have a modulus at 100% elongation of 0.75 MPa or less and a breaking strength of 17 MPa or more, as measured in accordance with JIS K6251. In particular, the ASTM standard "D3577" for use in surgical gloves stipulates a breaking strength of 17 MPa or more, and if the breaking strength is 20 MPa, it can be said to show even more sufficient mechanical properties. Further, if the modulus at 100% elongation is 0.75 MPa or less, it can be said to have sufficient flexibility, and if it is 0.70 MPa or less, it can be said to have even more sufficient flexibility. A dip-molded film containing the chloroprene-based polymer latex composition according to one embodiment of the present invention can be flexible and have sufficient mechanical strength even without containing sulfur and a vulcanization accelerator that poses hygiene concerns.

2. Method for producing chloroprene-based polymer latex composition

The method for producing the chloroprene-based polymer latex composition according to one embodiment of the present invention may include a raw material mixing step of mixing raw materials containing a chloroprene-based polymer latex, a metal oxide, a heteroaromatic ring-based compound, and other necessary chemicals.

In the mixing step, it is also possible to prepare an aqueous dispersion containing a metal oxide, a heteroaromatic ring-based compound, and other necessary chemicals in advance, and then mix the chloroprene-based polymer latex and the aqueous dispersion.

The mixing step can be performed using a known mixing device such as a ball mill.

3. Dip-molded article (dip-molded coating/film)

Next, the dip-molded article according to the second embodiment of the present invention will be described. The dip-molded article according to one embodiment of the present invention is obtained using the above-mentioned chloroprene-based polymer latex composition. The dip-molded article of this embodiment is obtained by dip-molding

the chloroprene-based polymer latex composition of the first embodiment described above alone or after blending it with other chloroprene-based polymer latex compositions, and it has a low modulus value at 100% elongation, is flexible, and has excellent mechanical properties such as strength and elongation. The dip-molded article can be suitably used as industrial/general household gloves, medical gloves, balloons, catheters, and boots.

The thickness (for example, minimum thickness) of the dip-molded article may be 0.01 to 0.50 mm. The thickness of the dip-molded article is, for example, 0.01, 0.05, 0.10, 0.20, 0.30, 0.40, 0.50 mm, and may be within the range between any two of the numerical values exemplified here. The thickness of the dip-molded article can be adjusted by the time for which the mold is immersed in the polymer latex composition, the solid content concentration of the chloroprene-based polymer latex composition, and the like. If it is desired to reduce the thickness of the dip-molded article, the immersion time may be shortened or the solid content concentration of the chloroprene-based polymer latex composition may be reduced.

3.1 Method for producing dip-molded article

The molding method for producing the dip-molded article according to one embodiment of the present invention is not particularly limited, and may be molded according to a conventional method. Examples of the molding method include a coagulation liquid immersion method, a simple immersion method, a heat-sensitive immersion method, an electrodeposition method, etc. The coagulation liquid immersion method can be used from the viewpoint of easy production and from the viewpoint of easily obtaining a dip-molded article with a constant thickness. Specifically, a mold die coated with a coagulating liquid is immersed in the chloroprene-based polymer latex composition, and the chloroprene-based polymer latex composition is coagulated. Then, after water-soluble impurities are removed by leaching, it is dried, and further heated and vulcanized to form a dip-molded film (rubber coating), and then the dip-molded film is released from the mold. Thereby, a film-like dip-molded article can be obtained.

Furthermore, the method for producing the dip-molded article according to one embodiment of the present invention may include a step of heating the obtained dip-molded article and vulcanizing the polymer latex composition and the unvulcanized dip-molded article. The vulcanization temperature may be appropriately set according to the composition of the chloroprene-based polymer latex composition, and may be 100 to 220°C, or 110 to 190°C. The vulcanization time may be appropriately set depending on the composition of the chloroprene-based polymer latex composition, the shape of the unvulcanized molded article, etc., and may be 10 to 300 minutes.

3.2 Mechanical properties of dip-molded article (film)

The dip-molded article according to one embodiment of the present invention can be a molded article having a modulus at 100% elongation of 0.75 MPa or less, and a breaking strength of 17 MPa or more, as measured in accordance with JIS K 6251.

The dip-molded article according to one embodiment of the present invention has a breaking strength measured in accordance with JIS K6251 of, for example, 17, 18, 19, 20, 21, 22, 23, 24, 25, 26, 27, 28, 29, 30, 31, 32, 33, 34, 35, 36, 37, 38, 39, 40 MPa, and may be within the range between any two of the numerical values exemplified here.

In addition, the dip-molded article according to one embodiment of the present invention has a breaking elongation measured in accordance with JIS K6251 of, for example, 1000, 1050, 1100, 1150, 1200, 1250, 1300, 1350, 1400%, and may be within the range between any two of the numerical values exemplified here.

The dip-molded article according to one embodiment of the present invention has a modulus at 100% elongation measured in accordance with JIS K6251 of, for example, 0.3, 0.35, 0.4, 0.45, 0.5, 0.55, 0.6, 0.65, 0.7, 0.75 MPa, and may be within the range between any two of the numerical values exemplified here.

The method for producing the dip-molded article, and the method for measuring breaking elongation, breaking strength, and 100% modulus can be as described in Examples.

As described above, the dip-molded article according to one embodiment of the present invention is flexible and can have sufficient mechanical strength without containing sulfur and a vulcanization accelerator that poses hygiene concerns.

Conventional chloroprene rubber requires the use of sulfur and a vulcanization accelerator in order to obtain a vulcanized rubber with the desired mechanical strength. As a result, the flexibility deteriorates, making it difficult to achieve both high breaking strength and excellent flexibility. In addition, for chloroprene rubbers such as dithiocarbamic acid or thiourea-based chloroprene rubbers, eliminating the use of general-purpose vulcanization accelerator and sulfur not only reduces the risk of allergies but also reduces costs. Therefore, a chloroprene-based polymer latex composition capable of obtaining dip-molded products exhibiting sufficient mechanical strength while having excellent flexibility without using sulfur and general-purpose vulcanization accelerator, is desired.

The dip-molded article obtained from the chloroprene-based polymer latex composition of this embodiment may contain sulfur or a vulcanization accelerator. However, the dip-molded article described above has mechanical

properties equivalent to or better than vulcanized dip-molded articles obtained from conventional chloroprene-based polymer latexes even without containing sulfur and a vulcanization accelerator. Therefore, the chloroprene-based polymer latex composition of this embodiment is suitably used as a raw material for the dip-molded article (dip-molded coating).

## Examples

Hereinafter, the present invention will be explained in more detail based on Examples and Comparative Examples, but the present invention is not limited to these Examples. In the following examples related to the synthesis of chloroprene-based polymer latex, unless otherwise specified, "part by mass" is the amount relative to total 100 parts by mass of chloroprene monomer and 2,3-dichloro-1,3-butadiene monomer before the start of emulsion polymerization. In addition, "% by mass" is the amount relative to 100% by mass of the chloroprene-based polymer contained in the chloroprene-based polymer latex.

[Synthesis Example A1]

<Preparation of chloroprene-based polymer latex>

In a polymerization vessel with an internal volume of 40 liters, 91 parts by mass of chloroprene monomer, 9 parts by mass of 2,3-dichloro-1,3-butadiene monomer, 0.02 parts by mass of n-dodecylmercaptan, 90 parts by mass of pure water, 4.5 parts by mass of rosin acid X ((total amount b of each component)/(total amount a of each component)=0.80), 1.50 parts by mass of potassium hydroxide, and 0.50 parts by mass of sodium salt of β-naphthalenesulfonic acid formalin condensate (trade name "Demol N", manufactured by Kao Corporation) were added. The pH of the aqueous emulsion before the start of polymerization was 13.2. 0.1 parts by mass of potassium persulfate was added as a polymerization initiator, and polymerization was carried out at a polymerization temperature of 25°C under a nitrogen flow. When the polymerization conversion rate (polymerization rate) reached 82%, 0.01 parts by mass of diethylhydroxylamine was added as a polymerization terminator to stop the polymerization, and a latex was obtained.
The latex was distilled under reduced pressure to remove unreacted monomers and some water to obtain a chloroprene-based polymer latex with a solid content of 60%.

[Synthesis Examples A2 to A5]

Chloroprene-based polymer latex samples of Synthesis Examples A2 to A5 were prepared in the same manner as in Synthesis Example A1, except that the charging amounts of 2,3-dichlsoro-1,3-butadiene and n-dodecylmercaptan as a chain transfer agent, the type and amount of rosin acid, the polymerization temperature, and the polymerization conversion rate were changed as shown in Table 1 below.

[Synthesis Example B1]

<Preparation of chloroprene-based polymer latex>

In a polymerization vessel with an internal volume of 40 liters, 60 parts by mass of the total 92 parts by mass of chloroprene monomer, 8 parts by mass of 2,3-dichloro-1,3-butadiene monomer, 3.0 parts by mass of n-dodecylmercaptan, 90 parts by mass of pure water, 4.5 parts by mass of rosin acid X ((total amount b of each component)/(total amount a of each component)=0.80), 1.50 parts by mass of potassium hydroxide, and 0.50 parts by mass of sodium salt of β-naphthalenesulfonic acid formalin condensate (trade name "Demol N", manufactured by Kao Corporation) were added as initial charges. The pH of the aqueous emulsion before the start of polymerization was 13.0. 0.1 parts by mass of potassium persulfate was added as a polymerization initiator, and polymerization was carried out at a polymerization temperature of 40°C under a nitrogen flow. Thereafter, the remaining 32 parts by mass of chloroprene monomer was added at a stage when the polymerization conversion rate was 65% in terms of the amount of initially charged monomers. When the polymerization conversion rate reached 88%, 0.01 parts by mass of diethylhydroxylamine was added as a polymerization terminator to stop the polymerization, and a latex was obtained.
The latex was distilled under reduced pressure to remove unreacted monomers to obtain a chloroprene-based polymer latex with a solid content of 60%.

[Synthesis Examples B2 to B5]

Chloroprene-based polymer latex samples of Synthesis Examples B2 to B5 were prepared in the same manner as in Synthesis Example B1, except that the charging amounts of 2,3-dichloro-1,3-butadiene and n-dodecylmercaptan

as a chain transfer agent, the type and amount of rosin acid, the polymerization temperature, and the polymerization conversion rate were changed as shown in Table 1 below.

[Synthesis Example C]

<Preparation of chloroprene-based polymer latex>

In a polymerization vessel with an internal volume of 40 liters, 93 parts by mass of chloroprene monomer, 7 parts by mass of 2,3-dichloro-1,3-butadiene monomer, 5.0 parts by mass of n-dodecylmercaptan, 90 parts by mass of pure water, 4.5 parts by mass of rosin acid X ((total amount b of each component)/(total amount a of each component)=0.80), 1.50 parts by mass of potassium hydroxide, 0.50 parts by mass of sodium salt of β-naphthalenesulfonic acid formalin condensate (trade name "Demol N", manufactured by Kao Corporation) were added. The pH of the aqueous emulsion before the start of polymerization was 13.1. 0.1 parts by mass of potassium persulfate was added as a polymerization initiator, and polymerization was carried out at a polymerization temperature of 35°C under a nitrogen flow. When the polymerization conversion rate reached 85%, 0.01 parts by mass of diethylhydroxylamine was added as a polymerization terminator to stop the polymerization, and a latex was obtained.

The latex was distilled under reduced pressure to remove unreacted monomers to obtain a chloroprene-based polymer latex with a solid content of 60%.

<Measurement of amount of each resin acid component contained in rosin acid X and Y>

The amount of each resin acid component contained in the used rosin acid X was measured using gas chromatography-mass spectrometry after being dissolved in ethanol/toluene (ETA solution) to form a 1.5% solution and treated with hydrochloric acid.

[Measurement conditions for gas chromatography-mass spectrometry]

Gas chromatography-mass spectrometry was performed under the following measurement conditions.

- Column used: FFAP 0.32 mmφ×25m (film thickness 0.3μm)
- Column temperature: 200°C→250°C
- Temperature rising rate: 10°C/min
- Inlet temperature: 270°C
- Injection volume: 1μL
- Interface temperature: 270°C
- Ion source temperature: 270°C
- Ionization current: 50μA
- Ionization voltage: 70eV
- Detector voltage: -1000V
- Detector voltage: EI method

Peak areas of peaks corresponding to dehydroabietic acid, pimaric acid, isopimaric acid, dihydroabietic acid, and salts thereof, and their total peak area (total amount a), and peak areas of peaks corresponding to abietic acid, neoabietic acid, palustric acid, levopimaric acid, and salts thereof, and their total peak area (total amount b) were determined. Moreover, the ratio of each of these peak area values to the total peak area value detected by gas chromatography-mass spectrometry was regarded as the content.

As a result of measuring rosin acid X, among conjugated resin acid components, 31.2% of abietic acid, 0.8% of neoabietic acid, 4.0% of palustric acid, and 2.7% of levopimaric acid were detected, and the total area (b) of the conjugated resin acid components was 38.7%. Among non-conjugated resin acid components, 35.3% of dehydroabietic acid, 7.5% of pimaric acid, 3.2% of isopimaric acid, and 2.4% of dihydroabietic acid were detected, and the total area (a) of the non-conjugated resin acid components was 48.4%. Therefore, the value (b/a) of (content of conjugated resin acid components)÷(content of non-conjugated resin acid components) of rosin acid X was 38.7÷48.4=0.80. Rosin acid Y was analyzed in a similar manner. In rosin acid Y, abietic acid, neoabietic acid, palustric acid, levopimaric acid, and salts thereof were not detected, and b/a=0.

<Measurement of toluene insoluble content of chloroprene-based polymer latex>

1g of chloroprene-based polymer rubber obtained by freeze-drying chloroprene-based polymer latex was cut

into 2 mm square pieces, placed in a conical beaker, and dissolved in toluene for 16 hours. Thereafter, it was centrifuged, and the gel content was separated using a 200-mesh wire mesh and dried, and the weight of the dried material was measured. The toluene insoluble content was calculated using the following formula.

(mass of solid obtained by separating and drying the gel content)/(mass of solid obtained by freeze-drying latex containing chloroprene-based polymer)×100

<Weight average molecular weight measurement of chloroprene-based polymer latex>

The obtained chloroprene-based polymer latex was dissolved in THF (tetrahydrofuran), and the weight average molecular weight of the eluted content (sol content) was measured by gel permeation chromatography (GPC). The first peak and the second peak can be obtained as the weight average molecular weight in terms of polystyrene, and were measured under the conditions described below.

<Weight average molecular weight measurement by gel permeation chromatography>

GPC measurements were performed under the following conditions. The weight average molecular weight was determined in terms of polystyrene.

- Gel permeation chromatography (GPC) measuring device: gel permeation chromatograph (HLC-8320) manufactured by Tosoh Corporation
- Column: TSKgel ALPHA-M manufactured by Tosoh Corporation
- Eluent: tetrahydrofuran (manufactured by Kanto Chemical Co., Inc.)
- Eluent flow rate: 1.0ml/min
- Column temperature: 40°C
- Detection method: Differential refractive index (RI) meter
- Calibration curve: created using standard polystyrene

[Table 1]

| Table 1 | | Unit | Synthesis Examples | | | | | | | | | |
|---|---|---|---|---|---|---|---|---|---|---|---|---|
| | | | A1 | A2 | A3 | A4 | B1 | B2 | B3 | B4 | B5 | C |
| Polymerization recipe | Chloroprene | parts by mass | 91 | 91 | 90 | 91 | 92 | 95 | 100 | 92 | 95 | 93 |
| | 2,3-dichloro-1,3-butadiene | parts by mass | 9 | 9 | 10 | 9 | 8 | 5 | - | 8 | 5 | 7 |
| | n-dodecylmercaptan | parts by mass | 0.02 | 0.05 | 0.02 | 0.08 | 3.0 | 9.0 | 9.0 | 13.0 | 0.8 | 5.0 |
| | Rosin acid X (b/a=0.80) | parts by mass | 4.5 | 4.5 | - | 4.5 | 4.5 | 4.3 | - | 4.5 | 4.5 | 4.5 |
| | Rosin acid Y (b/a=0) | parts by mass | - | - | 4.3 | | - | - | 4.3 | - | - | - |
| Polymerization conditions | Polymerization temperature | °C | 25 | 25 | 15 | 25 | 40 | 20 | 20 | 15 | 45 | 35 |
| | Polymerization rate | % | 82 | 90 | 86 | 90 | 88 | 95 | 95 | 88 | 88 | 85 |
| Physical properties of latex | Toluene insoluble content | % by mass | 81 | 80 | 88 | 80 | 4 | 2 | 5 | 3 | 12 | 4 |
| | Weight average molecular weight (Mw) | | 800,000 | 570,000 | 800,000 | 450,000 | 20,200 | 7,700 | 7,500 | 4,200 | 120,000 | 14,000 |

[Example 1]

A mixed chloroprene-based polymer latex was obtained by stirring and mixing 75 parts by mass of Synthesis Example A1 sample and 25 parts by mass of Synthesis Example B1 sample when the total of the chloroprene-based polymer latex of Synthesis Example A1 and the chloroprene-based polymer latex of Synthesis Example B1 is 100 parts by mass.

<Measurement of content of alkyl mercaptan compound relative to solid content of chloroprene-based polymer latex>

The chloroprene-based polymer latex obtained by mixing was diluted 100 times with tetrahydrofuran (THF), and measured using gas chromatography. In this example, n-dodecylmercaptan was used as a chain transfer agent, and the content of this compound was 0.08 parts by mass per 100 parts by mass of solid content of the chloroprene-based polymer latex. The measurement conditions for gas chromatography are shown below.

- Column used: DB-5 0.25 mmφ×30m (film thickness 1.0μm)
- Column temperature: 50°C→280°C
- Temperature rising rate: 10°C/min
- Inlet temperature: 280°C
- Injection volume: 1μL
- Carrier: He 1.0ml/min (Split 1:30)

<Weight average molecular weight measurement of chloroprene-based polymer latex>

As a result of gel permeation chromatography (GPC) measurement of the THF-soluble content of the chloroprene-based polymer latex obtained by mixing, a first peak with a weight average molecular weight (Mw) of 800,000 and a second peak with a weight average molecular weight (Mw) of 20,200 were confirmed. The conditions for GPC measurement were the same as those for weight average molecular weight measurement in each of the above Synthesis Examples.

<Measurement of amount of resin acid component contained in chloroprene-based polymer latex>

3g of chloroprene-based polymer rubber obtained by freeze-drying the mixed chloroprene-based polymer latex was cut into 2 mm square pieces, placed in an eggplant-shaped flask equipped with a condenser, dissolved in ethanol/toluene (ETA solution) to form a 1.5% solution and treated with hydrochloric acid, and then measured using gas chromatography-mass spectrometry as described above. Peak areas of peaks corresponding to dehydroabietic acid, pimaric acid, isopimaric acid, dihydroabietic acid, and salts thereof, and their total peak area (total amount a), and peak areas of peaks corresponding to abietic acid, neoabietic acid, palustric acid, levopimaric acid, and salts thereof, and their total peak area (total amount b) were determined. Moreover, the ratio of each of these peak area values to the total peak area value detected by gas chromatography-mass spectrometry was regarded as the content. The value of (total amount b)=(total amount a) was 0.80.

<Measurement of toluene insoluble content of chloroprene-based polymer latex>

1g of chloroprene-based polymer rubber obtained by freeze-drying the mixed chloroprene-based polymer latex was cut into 2 mm square pieces, placed in a conical beaker, and dissolved in toluene for 16 hours. Thereafter, it was centrifuged, and the gel content was separated using a 200-mesh wire mesh and dried, and the weight of the dried material was measured. The toluene insoluble content was calculated using the following formula.

(mass of solid obtained by separating and drying the gel content)/(mass of solid obtained by freeze-drying latex containing chloroprene-based block copolymer)×100

The toluene insoluble content of the chloroprene-based polymer latex was 67% by mass.

<Preparation of evaluation sample (dip-molded film)>

(Preparation of chloroprene-based polymer latex composition)

A chloroprene-based polymer latex composition was prepared by mixing 5.1 parts by mass of aqueous dispersion with 100 parts by mass of solid content of the chloroprene-based polymer latex, and adding water to adjust the overall solid content concentration of the mixture to 30% by mass. The above aqueous dispersion was prepared by mixing 2 parts by mass of Type 2 zinc oxide, 2 parts by mass of butylated reaction product of p-cresol and dicyclopentadiene (trade name "Nocrac PBK", manufactured by Ouchi Shinko Chemical Industrial Co., Ltd.), 2-mercaptobenzimidazole (trade name "Nocrac MB", manufactured by Ouchi Shinko Chemical Industrial Co., Ltd.) described in chemical formula (2), 0.1 parts by mass of sodium salt of β-naphthalenesulfonic acid formalin condensate (trade name "Demol N", manufactured by Kao Corporation), and 13 parts by mass of water at 20°C for 16 hours using a ceramic ball mill. The obtained chloroprene-based polymer latex contains 2 parts by mass of Type 2 zinc oxide, 2 parts by mass of butylated reaction product of p-cresol and dicyclopentadiene (trade name "Nocrac PBK", manufactured by Ouchi Shinko Chemical Industrial Co., Ltd.), 2-mercaptobenzimidazole (trade name "Nocrac MB", manufactured by Ouchi Shinko Chemical Industrial Co., Ltd.) described in chemical formula (2), 0.1 parts by mass of sodium salt of β-naphthalenesulfonic acid formalin condensate (trade name "Demol N", manufactured by Kao Corporation), and 13 parts by mass of water, with respect to 100 parts by mass of solid content of the chloroprene-based polymer latex. In addition, the dip-molded article does not contain sulfur, and vulcanization accelerators such as thiuram-based, dithiocarbamate-based, thiourea-based, guanidine-based, xanthate-based, and thiazole-based vulcanization accelerators.

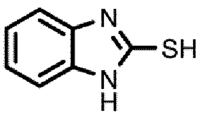
(2)

(Preparation of dip-molded film)

A ceramic cylinder (manufactured by SHINKO IND. LTD.) with an outer diameter of 50 mm was immersed for 1 second in a coagulating solution containing 62 parts by mass of water, 35 parts by mass of potassium nitrate tetrahydrate, and 3 parts by mass of calcium carbonate, and then taken out. After drying for 3 minutes, it was immersed for 10 seconds in the chloroprene-based polymer latex composition containing no sulfur and vulcanization accelerator prepared by the procedure described above. Thereafter, it was washed with running water at 45°C for 1 minute, and dried at 130°C for 4 hours, thereby producing a dip-molded film (dip-molded coating) for evaluation.

<Evaluation of dip-molded article>

(Modulus at 100% elongation, breaking strength and breaking elongation)

For each of the above dip-molded films that do not contain sulfur and vulcanization accelerators such as thiuram-based, dithiocarbamate-based, thiourea-based, guanidine-based, xanthate-based, or thiazole-based vulcanization accelerators, the modulus at 100% elongation, breaking strength, and breaking elongation were measured in accordance with JIS K 6251. The results are shown in Table 2.

(Film thickness)

The thickness of the film for evaluation (film thickness) was measured at three locations in the center of the film using a test piece thickness gauge (manufactured by Kobunshi Keiki Co., Ltd., trade name: ASKER SDA-12), and the minimum thickness is obtained as the thickness of the film for evaluation.

[Examples 2 to 15, Comparative Examples 1 to 6]

A dip-molded article was prepared in the same manner as in Example 1, except that the formulation of the chloroprene-based polymer latex was changed to the conditions shown in Tables 2, 3, and 4 below, and a dip-molded film sample containing no sulfur, and vulcanization accelerators such as thiuram-based, dithiocarbamate-based, thiourea-based, guanidine-based, xanthate-based, and thiazole-based vulcanization accelerators was produced and evaluated. In Examples 2 to 5 and 11 and Comparative Examples 1 to 4, the amounts of zinc oxide as a metal oxide, 2-mercaptobenzimidazole as a heteroaromatic ring-based compound, and Nocrac PBK as an antioxidant contained in the chloroprene-based polymer latex composition were changed. In Examples 6, 7, 12 to 15 and Comparative Example 5, the type and mixing ratio of the synthesized polychloroprene-based polymer latex were changed, and the content of alkyl mercaptan compound or the detected value of the weight average molecular weight peak were changed. In Examples 8 to 10 and Comparative Example 6, the heteroaromatic ring-based compound was changed to the compound represented by the following chemical formulas (3) to (6).

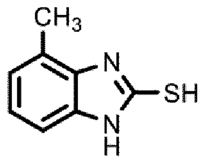

(3)

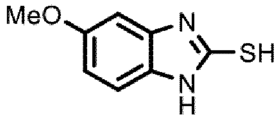

(4)

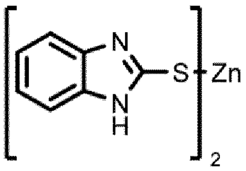

(5)

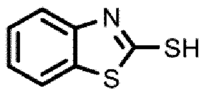

(6)

[Table 2]

| Table 2 | | Unit | Example 1 | | Example 2 | | Example 3 | | Example 4 | | Example 5 | | Example 6 | | Example 7 | | Example 8 | |
|---|---|---|---|---|---|---|---|---|---|---|---|---|---|---|---|---|---|---|
| | | | Synthesis Examples | | Synthesis Examples | | Synthesis Examples | | Synthesis Examples | | Synthesis Examples | | Synthesis Examples | | Synthesis Examples | | Synthesis Examples | |
| | | | A1 | B1 | A1 | B1 | A1 | B1 | A1 | B1 | A1 | B1 | A2 | B2 | A1 | B3 | A1 | B1 |
| Chloroprene-based polymer (latex) | Mixing ratio of each latex | % by mass | 75 | 25 | 75 | 25 | 75 | 25 | 75 | 25 | 75 | 25 | 75 | 25 | 75 | 25 | 75 | 25 |
| | Mw of first peak | | 800,000 | | 800,000 | | 800,000 | | 800,000 | | 800,000 | | 570,000 | | 800,000 | | 800,000 | |
| | Mw of second peak | | 20,200 | | 20,200 | | 20,200 | | 20,200 | | 20,200 | | 7,700 | | 7,500 | | 20,200 | |
| | n-dodecylmercaptan content | parts by mass | 0.08 | | 0.08 | | 0.08 | | 0.08 | | 0.08 | | 0.28 | | 0.22 | | 0.08 | |
| | Toluene insoluble content | % by mass | 67 | | 67 | | 67 | | 67 | | 67 | | 60 | | 64 | | 67 | |
| | Total amount b/total amount a of each resin component contained in latex | | 0.8 | | 0.8 | | 0.8 | | 0.8 | | 0.8 | | 0.8 | | 0.6 | | 0.8 | |
| Formulation | Solid content of chloroprene-based polymer latex | parts by mass | 100 | | 100 | | 100 | | 100 | | 100 | | 100 | | 100 | | 100 | |
| | ZnO (Type 2 zinc oxide) | parts by mass | 2.0 | | 12.0 | | 0.5 | | 2.0 | | 2.0 | | 2.0 | | 2.0 | | 2.0 | |
| | Antioxidant (Nocrac PBK) | parts by mass | 2.0 | | 2.0 | | 2.0 | | 1.0 | | 2.0 | | 2.0 | | 2.0 | | 2.0 | |
| | Heteroaromatic ring-based compound | structure | chemical formula (2) | | chemical formula (2) | | chemical formula (2) | | chemical formula (2) | | chemical formula (2) | | chemical formula (2) | | chemical formula (2) | | chemical formula (3) | |
| | | parts by mass | 1.0 | | 1.0 | | 1.0 | | 0.3 | | 7.0 | | 1.0 | | 1.0 | | 1.0 | |

(continued)

| Table 2 | | Unit | Example 1 | | Example 2 | | Example 3 | | Example 4 | | Example 5 | | Example 6 | | Example 7 | | Example 8 | |
|---|---|---|---|---|---|---|---|---|---|---|---|---|---|---|---|---|---|---|
| | | | Synthesis Examples | | Synthesis Examples | | Synthesis Examples | | Synthesis Examples | | Synthesis Examples | | Synthesis Examples | | Synthesis Examples | | Synthesis Examples | |
| | | | A1 | B1 | A1 | B1 | A1 | B1 | A1 | B1 | A1 | B1 | A2 | B2 | A1 | B3 | A1 | B1 |
| Mechanical properties of dip-molded article (130°C ×4 hours) | Film thickness | mm | 0.20 | | 0.18 | | 0.20 | | 0.19 | | 0.19 | | 0.19 | | 0.20 | | 0.21 | |
| | Modulus at 100% elongation | MPa | 0.63 | | 0.68 | | 0.58 | | 0.55 | | 0.69 | | 0.60 | | 0.64 | | 0.61 | |
| | Breaking strength | MPa | 22.3 | | 22.9 | | 20.4 | | 20.8 | | 23.8 | | 20.5 | | 21.1 | | 21.7 | |
| | Breaking elongation | % | 1078 | | 1092 | | 1078 | | 1150 | | 1100 | | 1128 | | 1078 | | 1082 | |

[Table 3]

| Table 3 | | Unit | Example 9 | | Example 10 | | Example 11 | | Example 12 | | Example 13 | | Example 14 | | Example 15 | |
|---|---|---|---|---|---|---|---|---|---|---|---|---|---|---|---|---|
| | | | Synthesis Examples | | Synthesis Examples | | Synthesis Examples | | Synthesis Examples | | Synthesis Examples | | Synthesis Examples | | Synthesis Examples | |
| | | | A1 | B1 | A1 | B1 | A1 | B1 | A3 | - | A4 | B1 | A1 | B4 | A1 | B5 |
| Chloroprene-based polymer (latex) | Mixing ratio of each latex | % by mass | 75 | 25 | 75 | 25 | 75 | 25 | 100 | - | 75 | 25 | 75 | 25 | 75 | 25 |
| | Mw of first peak | | 800,000 | | 800,000 | | 800,000 | | 800,000 | | 450,000 | | 800,000 | | 800,000 | |
| | Mw of second peak | | 20,200 | | 20,200 | | 20,200 | | - | | 20,200 | | 42,000 | | 120,000 | |
| | n-dodecylmercaptan content | parts by mass | 0.08 | | 0.08 | | 0.08 | | 0.02 | | 0.12 | | 0.30 | | 0.03 | |
| | Toluene insoluble content | % by mass | 67 | | 67 | | 67 | | 88 | | 58 | | 61 | | 71 | |
| | Total amount b/total amount a of each resin component contained in latex | | 0.8 | | 0.8 | | 0.8 | | 0.0 | | 0.8 | | 0.8 | | 0.8 | |
| Formulation | Solid content of chloroprene-based polymer latex | parts by mass | 100 | | 100 | | 100 | | 100 | | 100 | | 100 | | 100 | |
| | ZnO (Type 2 zinc oxide) | parts by mass | 2.0 | | 2.0 | | 2.0 | | 2.0 | | 2.0 | | 2.0 | | 2.0 | |
| | Antioxidant (Nocrac PBK) | parts by mass | 2.0 | | 2.0 | | 0.1 | | 2.0 | | 2.0 | | 2.0 | | 2.0 | |
| | Heteroaromatic ring-based compound | structure | chemical formula (4) | | chemical formula (5) | | chemical formula (2) | | chemical formula (2) | | chemical formula (2) | | chemical formula (2) | | chemical formula (2) | |
| | | parts by mass | 1.0 | | 1.0 | | 1.0 | | 1.0 | | 1.0 | | 1.0 | | 1.0 | |

(continued)

| Table 3 | | Unit | Example 9 | | Example 10 | | Example 11 | | Example 12 | | Example 13 | | Example 14 | | Example 15 | |
|---|---|---|---|---|---|---|---|---|---|---|---|---|---|---|---|---|
| | | | Synthesis Examples | | Synthesis Examples | | Synthesis Examples | | Synthesis Examples | | Synthesis Examples | | Synthesis Examples | | Synthesis Examples | |
| | | | A1 | B1 | A1 | B1 | A1 | B1 | A3 | - | A4 | B1 | A1 | B4 | A1 | B5 |
| Mechanical properties of dip-molded article (130°C ×4 hours) | Film thickness | mm | 0.20 | | 0.18 | | 0.20 | | 0.20 | | 0.20 | | 0.20 | | 0.20 | |
| | Modulus at 100% elongation | MPa | 0.63 | | 0.63 | | 0.47 | | 0.74 | | 0.62 | | 0.50 | | 0.73 | |
| | Breaking strength | MPa | 22.2 | | 22.9 | | 17.1 | | 23.5 | | 18.8 | | 17.3 | | 23.5 | |
| | Breaking elongation | % | 1100 | | 1052 | | 1078 | | 1190 | | 1260 | | 1260 | | 1078 | |

[Table 4]

| Table 4 | | Unit | Comparative Example 1 | | Comparative Example 2 | | Comparative Example 3 | | Comparative Example 4 | | Comparative Example 5 | | Comparative Example 6 | |
|---|---|---|---|---|---|---|---|---|---|---|---|---|---|---|
| | | | Synthesis Examples | | Synthesis Examples | | Synthesis Examples | | Synthesis Examples | | Synthesis Examples | | Synthesis Examples | |
| | | | A1 | B1 | A1 | B1 | A1 | B1 | A1 | B1 | A1 | C | A1 | B1 |
| Chloroprene-based polymer (latex) | Mixing ratio of each latex | % by mass | 75 | 25 | 75 | 25 | 75 | 25 | 75 | 25 | 75 | 25 | 75 | 25 |
| | Mw of first peak | | 800,000 | | 800,000 | | 800,000 | | 800,000 | | 800,000 | | 800,000 | |
| | Mw of second peak | | 20,200 | | 20,200 | | 20,200 | | 20,200 | | 16,000 | | 20,200 | |
| | n-dodecylmercaptan content | parts by mass | 0.08 | | 0.08 | | 0.08 | | 0.08 | | 0.47 | | 0.08 | |
| | Toluene insoluble content | % by mass | 67 | | 67 | | 67 | | 67 | | 63 | | 67 | |
| | Total amount b/total amount a of each resin component contained in latex | | 0.8 | | 0.8 | | 0.8 | | 0.8 | | 0.8 | | 0.8 | |
| Formulation | Solid content of chloroprene-based polymer latex | parts by mass | 100 | | 100 | | 100 | | 100 | | 100 | | 100 | |
| | ZnO (Type 2 zinc oxide) | parts by mass | 2.0 | | - | | 18.0 | | 2.0 | | 2.0 | | 2.0 | |
| | Antioxidant (Nocrac PBK) | parts by mass | 2.0 | | 2.0 | | 1.0 | | 1.0 | | 1.0 | | 1.0 | |
| | Heteroaromatic ring-based compound | structure | - | | chemical formula (2) | | chemical formula (2) | | chemical formula (2) | | chemical formula (2) | | chemical formula (6) | |
| | | parts by mass | - | | 1.0 | | 1.0 | | 12.0 | | 1.0 | | 1.0 | |

(continued)

| Table 4 | | Unit | Comparative Example 1 | | Comparative Example 2 | | Comparative Example 3 | | Comparative Example 4 | | Comparative Example 5 | | Comparative Example 6 | |
|---|---|---|---|---|---|---|---|---|---|---|---|---|---|---|
| | | | Synthesis Examples | | Synthesis Examples | | Synthesis Examples | | Synthesis Examples | | Synthesis Examples | | Synthesis Examples | |
| | | | A1 | B1 | A1 | B1 | A1 | B1 | A1 | B1 | A1 | C | A1 | B1 |
| Mechanical properties of dip-molded article (130°C x4 hours) | Film thickness | mm | 0.20 | | 0.19 | | 0.22 | | mixed solution unstable | | 0.21 | | 0.21 | |
| | Modulus at 100% elongation | MPa | 0.54 | | 0.52 | | 0.79 | | cannot be prepared | | 0.79 | | 0.45 | |
| | Breaking strength | MPa | 15.9 | | 16.2 | | 22.9 | | - | | 22.1 | | 16.9 | |
| | Breaking elongation | % | 1145 | | 1100 | | 1050 | | - | | 1080 | | 1185 | |

As is clear from Table 2 amd 4 above, the dip=molded articles (dip-molded coatings) obtained from Example 1 to 15 using the choroprene-based polymer latex composition of the present invention had high breaking strenght and low modulus value at 100% elongation, that is, they had excellent mechanical properties such as breaking strenght and breaking elongation while having very excellent flexibility.

In the Comparative Example 1, sincer the chloroprene-based polymer latex composition does not contain the heteroaromatic ring-based compound, the breaking strength was inferior.

In the Comparative Example 2, since the chloroprene-based polymer latex composition does not contain the metal oxide (zinc oxide), the crosslinking effect between the chloroprene-based polymers did not appear, resulting in inferior breaking strength.

In the Comparative Example 3, since the amount of the metal oxide (zinc oxide) in the chloroprene-based polymer latex composition is large, the crosslinking effect between the chloroprene polymers was too apparent, resulting in a high modulus 100 value and decreased flexibility.

In the Comparative Example 4, since the amount of the heteroaromatic ring-based compound in the chloroprene-based polymer latex composition is large, the blending stability of the chloroprene-based polymer latex composition was very poor, and it was not possible to obtain a dip-molded article.

In the Comparative Example 5, since the content of n-dodecylmercaptan as an alkyl mercaptan compound is high relative to solid content of the chloroprene-based polymer in the chloroprene-based polymer latex composition, the modulus 100 value was high and the flexibility was reduced. In addition, hygienic concerns regarding n-dodecylmercaptan remained, and the odor derived from mercaptan had become severe.

In the Comparative Example 6, since 2-mercaptobenzothiazole (trade name "Nocceler M", manufactured by Ouchi Shinko Chemical Industrial Co., Ltd.) described in the above-mentioned chemical formula (6), for which the structure of the heteroaromatic ring-based compound in the chloroprene-based polymer latex composition does not correspond to the chemical formula (1), was used, the breaking strength was inferior.

In addition, in Example 12 using only Synthesis Example A3 and Example 15 in which the weight average molecular weight of the second peak is high, the obtained dip-molded film exhibited sufficiently excellent breaking strength. Further, as in Examples 1 to 11 and 13 to 15, it has been confirmed that when Synthesis Example A containing a high molecular weight chloroprene-based polymer and Synthesis Example B containing a low molecular weight chloroprene-based polymer are mixed, and the chloroprene-based polymer latex has a first peak with a weight average molecular weight of 500,000 or more and a second peak with a weight average molecular weight of 7,000 to 80,000, the plasticizing effect of the low molecular weight polymer is exhibited, and a dip-molded film having high breaking strength as well as excellent flexibility can be obtained.

## Claims

1. A chloroprene-based polymer latex composition comprising a chloroprene-based polymer latex, a metal oxide, and a heteroaromatic ring-based compound, wherein:

   the chloroprene-based polymer latex composition comprises 0.5 to 15.0 parts by mass of the metal oxide and 0.1 to 10.0 parts by mass of the heteroaromatic ring-based compound per 100 parts by mass of solid content of the chloroprene-based polymer latex,
   the chloroprene-based polymer latex composition has a content of alkyl mercaptan compounds of 0.34 parts by mass or less per 100 parts by mass of solid content of the chloroprene-based polymer latex, and
   the heteroaromatic ring-based compound is represented by chemical formula (1),

   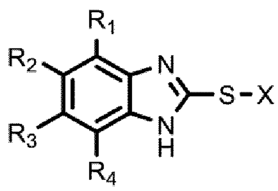

   (1)

   in chemical formula (1), X represents a hydrogen atom or a metal atom, $R_1$ to $R_4$ each represents a hydrogen atom, an alkyl group which may have a substituent, an ether group which may have a substituent, a nitro group, an amino group, or a carboxyl group, $R_1$ to $R_4$ each may be the same or different.

2. The chloroprene-based polymer latex composition of Claim 1, wherein:

the chloroprene-based polymer latex composition comprises 0.5 to 10.0 parts by mass of an antioxidant per 100 parts by mass of solid content of the chloroprene-based polymer latex.

**3.** The chloroprene-based polymer latex composition of Claim 1 or 2, wherein:

the chloroprene-based polymer latex comprises at least one of a homopolymer of chloroprene and a copolymer of chloroprene and 2,3-dichloro-1,3-butadiene, and
the chloroprene-based polymer latex has a first peak with a weight average molecular weight of 500,000 or more and a second peak with a weight average molecular weight of 7,000 to 80,000, in a molecular weight distribution obtained by gel permeation chromatography measurement of a sol content soluble in tetrahydrofuran in the chloroprene-based polymer latex.

**4.** The chloroprene-based polymer latex composition of Claim 1 or 2, wherein:
a chloroprene-based polymer rubber obtained by freeze-drying the chloroprene-based polymer latex has a toluene insoluble content of 50 to 85% by mass.

**5.** The chloroprene-based polymer latex composition of Claim 1 or 2, wherein:
a chloroprene-based polymer rubber obtained by freeze-drying the chloroprene-based polymer latex is cut into pieces, placed in a flask equipped with a condenser, and extracted with an ethanol/toluene azeotropic mixture specified by JIS K 6229 to form an extract, among components of the extract measured by gas chromatography, a mass ratio b/a of a total amount b of abietic acid, neoabietic acid, palustric acid, levopimaric acid, and salts thereof to a total amount a of dehydroabietic acid, pimaric acid, isopimaric acid, dihydroabietic acid, and salts thereof is 0.10 or more.

**6.** The chloroprene-based polymer latex composition of Claim 1 or 2, wherein:
the chloroprene-based polymer latex composition does not comprise thiuram-based, dithiocarbamate-based, thiourea-based, guanidine-based, xanthate-based, or thiazole-based vulcanization accelerators, and sulfur.

**7.** A dip-molded article obtained using the chloroprene-based polymer latex composition of Claim 1 or 2.

**8.** The dip-molded article of Claim 7, wherein:
the dip-molded article is an industrial or general household glove, a medical glove, a balloon, a catheter, or a boot.

**INTERNATIONAL SEARCH REPORT**

International application No.
**PCT/JP2022/036220**

**A. CLASSIFICATION OF SUBJECT MATTER**

***C08L 11/02***(2006.01)i; ***C08F 36/18***(2006.01)i; ***C08K 3/22***(2006.01)i; ***C08K 5/3447***(2006.01)i
FI: C08L11/02; C08K3/22; C08K5/3447; C08F36/18

According to International Patent Classification (IPC) or to both national classification and IPC

**B. FIELDS SEARCHED**

Minimum documentation searched (classification system followed by classification symbols)

C08L11/02; C08F36/18; C08K3/22; C08K5/3447

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2020/230746 A1 (DENKA CO., LTD.) 19 November 2020 (2020-11-19) | 1-8 |
| A | WO 2020/189516 A1 (DENKA CO., LTD.) 24 September 2020 (2020-09-24) | 1-8 |
| A | JP 8-188676 A (DENKI KAGAKU KOGYO K.K.) 23 July 1996 (1996-07-23) | 1-8 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/036220**

| Patent document cited in search report | Publication date (day/month/year) | Patent family member(s) | Publication date (day/month/year) |
|---|---|---|---|
| WO 2020/230746 A1 | 19 November 2020 | US 2022/0213235 A1 | |
| | | EP 3971218 A1 | |
| | | CN 113661181 A | |
| WO 2020/189516 A1 | 24 September 2020 | EP 3889186 A1 | |
| | | CN 113166281 A | |
| JP 8-188676 A | 23 July 1996 | US 5567771 A | |
| | | US 5624993 A | |
| | | EP 683202 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H7292165 A
- JP 2014114342 A
- WO 2019009038 A
- JP 2019143002 A